# EUROPEAN PATENT APPLICATION

(11) **EP 4 545 495 A1**
(43) Date of publication of application: **30.04.2025**
(21) Application number: 22947996.9
(22) Date of filing: 23.06.2022
(51) Int. Cl.: C02F 1/58

(54) **ADJUSTMENT DEVICE, ADJUSTMENT METHOD, AND MANUFACTURING METHOD**

(71) Applicant: FANUC CORPORATION, Oshino-mura Minamitsuru-gun Yamanashi 401-0597 (JP)
(72) Inventor: KASAI, Hirotsugu, Minamitsuru-gun, Yamanashi 401-0597 (JP); MAKINO, Yoshinori, Minamitsuru-gun, Yamanashi 401-0597 (JP)
(74) Representative: Schmidt, Steffen J.
(86) International application number: PCT/JP2022/025145
(87) International publication number: WO 2023/248435

(57) **Abstract**

This adjustment device (10) comprises: a container (12) having a liquid inflow part (18) and a liquid outflow part (20); and a porous filter (14) that supplies a liquid from the liquid inflow part (18) to the liquid outflow part (20) via pores. Solid metal particles are captured in the pores. The porous filter (14) increases the specific resistance value of the liquid after passing through the pores to be greater than the specific resistance of the liquid before passing through the pores.

## Description

### TECHNICAL FIELD

The present invention relates to adjustment of the resistivity of a liquid containing metal ions.

### BACKGROUND ART

It is known that there are various fields in which liquids having a low metal ion content are required.

For example, JP 2013-132735 A discloses a wire electrical discharge machine in which the resistivity of a dielectric working fluid is maintained at a value higher than a predetermined value by using an ion exchange resin to reduce the ion concentration in the dielectric working fluid. Ion exchange resins are used not only in wire electrical discharge machines but also in various fields. For example, ion exchange resins are used in semiconductor manufacturing, alcohol manufacturing, pharmaceutical manufacturing, water purification, sewage treatment, power generation, treatment for removing calcium and the like in boilers, sugar refining, and the like.

Further, for example, JP 2019-098225 A discloses a water purification system in which metal ions in water are insolubilized and the insolubilized metal components are removed from the water by filtration.

Further, for example, JP 2005-213200 A discloses a removable device for removing a metal compound in a surfactant by an apparatus in which an ion exchange resin-filled column and a functional filter unit are connected by a constituent member made of a specific material.

Furthermore, for example, JP 2006-095391 A discloses a waste water treatment apparatus for treating waste water containing metal ions.

### SUMMARY OF THE INVENTION

However, in the case of JP 2013-132735 A or JP 2005-213200 A, the ion exchange resin needs to be replaced. Further, in the case of JP 2019-098225 A, an insolubilizing agent for insolubilizing metal ions is required. Therefore, the running cost for adjusting the resistivity of the metal ions tends to increase. Accordingly, it has been desired to reduce the metal ion concentration of a liquid without using an ion exchange resin or an insolubilizing agent.

The present invention has the object of solving the aforementioned problem.

According to a first aspect of the present invention, there is provided an adjustment device that adjusts a resistivity of a liquid containing metal ions but no solid metal substance, the adjustment device comprising: a container including a liquid inflow portion and a liquid outflow portion; and a porous filter accommodated in the container and configured to supply the liquid from the liquid inflow portion to the liquid outflow portion through pores, wherein metal particles in a form of solid are trapped in the pores, and the porous filter makes a resistivity of the liquid after passing through the pores larger than a resistivity of the liquid before passing through the pores.

According to a second aspect of the present invention, there is provided an adjustment method for adjusting a resistivity of a liquid containing metal ions but no solid metal substance, the adjustment method comprising: causing the liquid to flow through pores of a porous filter in which metal particles in a form of solid are trapped, thereby making a resistivity of the liquid after passing through the pores larger than a resistivity of the liquid before passing through the pores.

According to a third aspect of the present invention, there is provided a manufacturing method for manufacturing an adjustment device that adjusts a resistivity of a liquid containing metal ions but no solid metal substance, the manufacturing method comprising: a recovery step (P1) of recovering, from a machine tool, a filtration filter configured to remove machining chips generated by machining of a workpiece performed by the machine tool; and an accommodating step (P2) of accommodating the filtration filter in a container including an inlet and an outlet for the liquid.

According to the above aspects, the metal ion concentration of the liquid can be reduced without using an ion exchange resin or an insolubilizing agent.

### BRIEF DESCRIPTION OF DRAWINGS

[FIG. 1] FIG. 1 is a schematic view showing a configuration of an adjustment device according to an embodiment;
[FIG. 2] FIG. 2 is a flowchart showing a flow of a manufacturing method for manufacturing the adjustment device;
[FIG. 3] FIG. 3 is a schematic view showing a configuration of the adjustment device according to a modification; and
[FIG. 4] FIG. 4 is a flowchart showing a flow of an adjustment method according to a modification.

### DETAILED DESCRIPTION OF THE INVENTION

### [Embodiment]

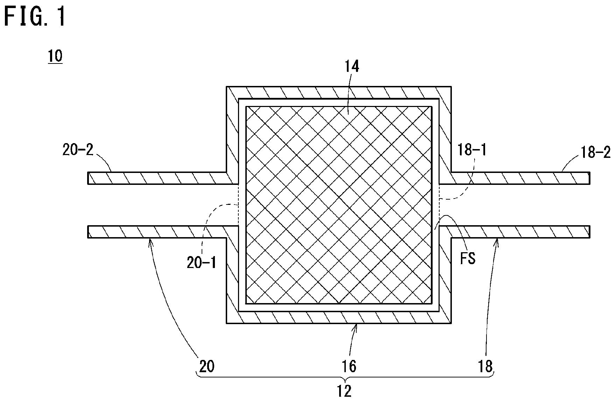

FIG. 1 is a schematic view showing a configuration of an adjustment device 10 according to an embodiment. The adjustment device 10 includes a container 12 and a porous filter 14.

The container 12 is a receptacle for accommodating the porous filter 14. The container 12 includes a container body portion 16, a liquid inflow portion 18, and a liquid outflow portion 20.

The container body portion 16 includes a filter accommodation space FS therein. The filter accommodation space FS is a space capable of accommodating the porous filter 14. The container body portion 16 may include an opening/closing lid for accommodating the porous filter 14 in the filter accommodation space FS. The container body portion 16 may be separable into a plurality of pieces in order for the porous filter 14 to be accommodated in the filter accommodation space FS.

The liquid inflow portion 18 communicates with the filter accommodation space FS. The liquid inflow portion 18 includes an inlet hole 18-1 and an inlet conduit 18-2. The inlet hole 18-1 is a hole that penetrates the container body portion 16 from the outer wall of the container body portion 16 to the inner wall of the container body portion 16. The inlet conduit 18-2 is a conduit pipe that covers the outside of the inlet hole 18-1 and extends outward from the outer wall surface of the container body portion 16. The inlet conduit 18-2 may be formed integrally with the container body portion 16, or may be joined to the container body portion 16 by a joining member. Further, the inlet conduit 18-2 may be removed.

The liquid outflow portion 20 communicates with the filter accommodation space FS. The liquid outflow portion 20 includes an outlet hole 20-1 and an outlet conduit 20-2. The outlet hole 20-1 is a hole that penetrates the container body portion 16 from the outer wall of the container body portion 16 to the inner wall of the container body portion 16. The outlet conduit 20-2 is a conduit pipe that covers the outside of the outlet hole 20-1 and extends outward from the outer wall surface of the container body portion 16. The outlet conduit 20-2 may be formed integrally with the container body portion 16, or may be joined to the container body portion 16 by a joining member. Further, the outlet conduit 20-2 may be removed.

The porous filter 14 is a porous body including pores. Examples of the porous body include filter paper and filter cloth. Solid metal particles are trapped in the pores. The metal particles include at least one of iron, aluminum, copper, zinc, tungsten carbide, tungsten, molybdenum, carbon, titanium, silicon, manganese, chromium, phosphorus, sulfur, and nickel. The metal particles may be machining chips generated by machining of a workpiece performed by a machine tool. When the metal particles are machining chips, the porous filter 14 may be a filtration filter that has been used in the past to remove machining chips generated by machining of the workpiece performed by the machine tool.

The machine tool is a wire electrical discharge machine, a die-sinking electrical discharge machine, a small hole electrical discharge machine, a cutting machine, or the like. The wire electrical discharge machine is a machine that machines a workpiece by electrical discharge generated at a machining gap formed between a wire electrode and the workpiece. The die-sinking electrical discharge machine is a machine that machines a workpiece by electrical discharge generated at a machining gap formed between a die-sinking electrode and the workpiece. The small hole electrical discharge machine is a machine that machines a workpiece by electrical discharge generated at a machining gap formed between a rod electrode having a circular cross section and the workpiece while rotating the rod electrode. The cutting machine is a machine that machines a workpiece using a tool.

The porous filter 14 supplies a liquid from the liquid inflow portion 18 to the liquid outflow portion 20 through the pores. In a case where the liquid supplied to the liquid inflow portion 18 contains metal ions but no solid metal substance, the resistivity of the liquid after passing through the pores of the porous filter 14 is larger than the resistivity of the liquid before passing through the pores.

In the adjustment method for the adjustment device 10, a liquid containing metal ions but no solid metal substance is caused to flow through the pores of the porous filter 14 in which the solid metal particles are trapped, whereby the resistivity of the liquid is increased.

The present inventors have found that, when clean water is caused to pass through the pores of a porous body in which machining chips are trapped, the resistivity of the clean water increases. The machining chips are solid metal particles generated by machining of a workpiece performed by a machine tool. The clean water is a liquid obtained by removing machining chips from a dielectric working fluid, and contains metal ions but no solid metal substance.

As described above, in the present embodiment, the porous filter 14 is provided in which solid metal particles are trapped in the pores. The porous filter 14 makes the resistivity of the liquid containing metal ions but no solid metal substance after passing through the pores larger than that before passing through the pores. This makes it possible to reduce the metal ion concentration of the liquid without using an ion exchange resin or an insolubilizing agent.

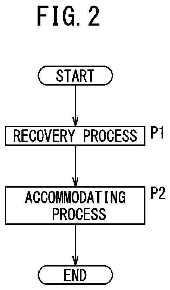

FIG. 2 is a flowchart showing a flow of a manufacturing method for manufacturing the adjustment device 10. FIG. 2 shows a flow of the manufacturing method in a case where a filtration filter that has been used in the past to remove machining chips generated by machining of the workpiece performed by the machine tool is used as the porous filter 14. The manufacturing method for manufacturing the adjustment device 10 includes a recovery process P1 and an accommodating process P2.

The recovery process P1 is a process of recovering the filtration filter from the machine tool. The filtration filter is disposed on a flow path through which wastewater, which is a dielectric working fluid containing machining chips, flows. The filtration filter recovered in the recovery process P1 is a filtration filter that has been used even once (through which wastewater has flowed).

The accommodating process P2 is a process of accommodating the filtration filter in the container 12. For example, in a case where the container body portion 16 includes an opening/closing lid, the filtration filter is accommodated in the filter accommodation space FS of the container body portion 16 via the opening/closing lid. Further, for example, in a case where the container body portion 16 is separable into a plurality of pieces, the plurality of pieces are joined together so that the filtration filter is accommodated in the filter accommodation space FS.

According to the manufacturing method described above, the adjustment device 10 that reduces the metal ion concentration of the liquid without using an ion exchange resin or an insolubilizing agent can be manufactured. Further, the filtration filter can be recycled as the porous filter 14.

The adjustment device 10 of the present embodiment can be installed in various devices that require a liquid with a low metal ion content. For example, the adjustment device 10 is installed at a necessary location of the wire electrical discharge machine, the water purification system, or the removal device described above. A method for installing the adjustment device 10 will be described by taking a wire electrical discharge machine as an example.

The wire electrical discharge machine includes a conduit for guiding a dielectric working fluid from a clean water tank to a work-pan. The clean water tank is a tank that stores clean water which is the dielectric working fluid from which the machining chips have been removed. The work-pan is a tank that stores a dielectric working fluid for immersing a workpiece. In a case where the adjustment device 10 is installed in the conduit, for example, the conduit is divided into an upstream portion and a downstream portion. An end portion (a downstream end portion) of the upstream portion is connected to the liquid inflow portion 18 of the adjustment device 10. On the other hand, the downstream portion (an upstream end portion) is connected to the liquid outflow portion 20 of the adjustment device 10.

In a case where the adjustment device 10 is installed in this manner, the porous filter 14 makes the resistivity of clean water supplied to the work-pan larger than the resistivity of clean water supplied from the clean water tank. Therefore, the metal ion concentration in the dielectric working fluid stored in the work-pan can be reduced without using an ion exchange resin.

The reciprocal of the resistivity [Ωm] is the conductivity [S/m], and there is a correlation between the resistivity [Ωm] and the conductivity [S/m]. Therefore, the resistivity [Ωm] can be replaced with the conductivity [S/m]. When the resistivity [Ωm] is replaced with the conductivity [S/m], the magnitude relationship of the values is reversed. For example, "increasing the resistivity [Ωm]" is synonymous with "decreasing the conductivity [S/m]".

### [Modifications]

The above embodiment may be modified as follows.

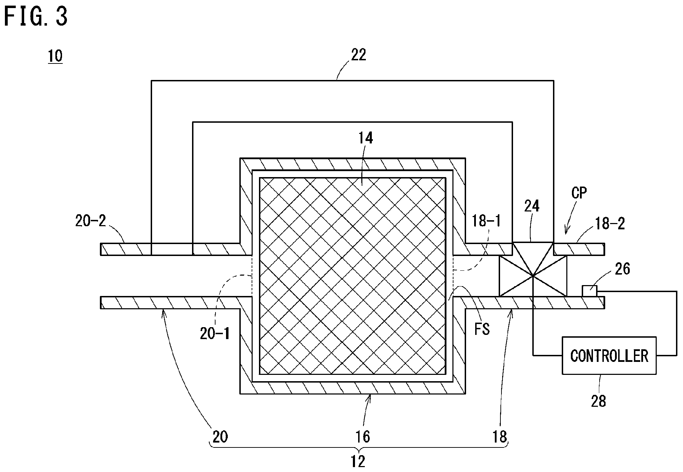

FIG. 3 is a schematic view showing a configuration of the adjustment device 10 according to a modification. In FIG. 3, the same components as those described in the embodiment are denoted by the same reference numerals. It should be noted that, in the present modification, descriptions that are duplicative of those given in the embodiment will be omitted.

In the present modification, a bypass conduit 22, a switching device 24, a resistivity meter 26, and a controller 28 are newly provided.

The bypass conduit 22 is a conduit that is connected to the liquid inflow portion 18 and the liquid outflow portion 20 while bypassing the porous filter 14.

The switching device 24 is a device that switches the supply destination of the liquid to either the bypass conduit 22 or the porous filter 14. The switching device 24 may be a three way valve or two on-off valves. In a case where the switching device 24 is a three way valve, the three way valve is provided at a connection portion CP between the bypass conduit 22 and the inlet conduit 18-2 of the liquid inflow portion 18 (see FIG. 3). In a case where the switching device 24 is two on-off valves, one of the two on-off valves is provided in the inlet conduit 18-2 located upstream of the connection portion CP, and the other of the two on-off valves is provided in the bypass conduit 22 near the connection portion CP.

The resistivity meter 26 measures the resistivity of the liquid supplied to the liquid inflow portion 18. The resistivity meter 26 may be provided in the liquid inflow portion 18 or may be provided in the supply source of liquid. For example, in a case where the adjustment device 10 is installed in an electrical discharge machine (a wire electrical discharge machine, a die-sinking electrical discharge machine, or a small hole electrical discharge machine), the supply source of the liquid is a clean water tank.

The controller 28 controls the switching device 24. The controller 28 includes a processor such as a CPU or an MPU, and one or a plurality of memories such as a ROM, a RAM, and a hard disk. The controller 28 compares the resistivity of the liquid measured by the resistivity meter 26 with a predetermined threshold. In a case where the resistivity is lower than the predetermined threshold, the controller 28 controls the switching device 24 to switch the supply destination of the liquid to the porous filter 14. On the other hand, in a case where the resistivity is equal to or greater than the predetermined threshold, the controller 28 controls the switching device 24 to switch the supply destination of the liquid to the bypass conduit 22.

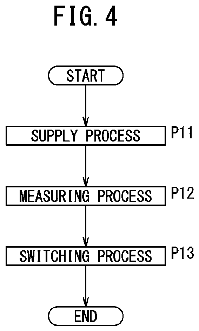

The adjustment method for the adjustment device 10 according to the present modification is executed as follows. FIG. 4 is a flowchart showing a flow of an adjustment method according to the modification. The adjustment method according to the modification includes a supply process P11, a measuring process P12, and a switching process P13.

The supply process P11 is a process of supplying a liquid containing metal ions but no solid metal substance to the switching device 24. In this process, for example, an on-off valve provided in a conduit for guiding the liquid from the supply source of the liquid to the liquid inflow portion 18 of the adjustment device 10 is opened.

The measuring process P12 is a process of measuring the resistivity of the liquid supplied to the liquid inflow portion 18. The resistivity is measured by the resistivity meter 26 provided in the liquid inflow portion 18, the supply source of the liquid, or the like.

The switching process P13 is a process of switching the supply destination of the liquid to either the bypass conduit 22 or the porous filter 14 based on the measurement result. The switching of the supply destination of the liquid is executed by the controller 28. In this process, in a case where the resistivity is lower than the predetermined threshold, the supply destination of the liquid is switched to the porous filter 14. On the other hand, in a case where the resistivity is equal to or greater than the predetermined threshold, the supply destination of the liquid is switched to the bypass conduit 22.

Each of the supply process P11, the measuring process P12, and the switching process P13 is continued from the start of adjustment of the resistivity of the liquid to the end of the adjustment thereof.

According to the present modification described above, the liquid can be supplied to the porous filter 14 only when necessary. Therefore, the life time of the porous filter 14 can be increased as compared with a case where the liquid is always supplied to the porous filter 14.

The resistivity meter 26 of the present modification may be replaced by a conductivity meter. The conductivity meter measures the conductivity of the liquid supplied to the liquid inflow portion 18. In a case where the resistivity meter 26 is replaced by the conductivity meter, the controller 28 compares the conductivity of the liquid measured by the conductivity meter with a predetermined threshold. In a case where the conductivity exceeds the predetermined threshold, the controller 28 controls the switching device 24 to switch the supply destination of the liquid to the porous filter 14. On the other hand, in a case where the conductivity is equal to or less than the predetermined threshold, the controller 28 controls the switching device 24 to switch the supply destination of the liquid to the bypass conduit 22.

### [Invention]

The invention and effects that can be grasped from the above description will be described below.
(1) The present invention is characterized by the adjustment device (10) that adjusts the resistivity of a liquid containing metal ions but no solid metal substance, the adjustment device including: the container (12) including the liquid inflow portion (18) and the liquid outflow portion (20); and the porous filter (14) accommodated in the container and configured to supply the liquid from the liquid inflow portion to the liquid outflow portion through pores, wherein solid metal particles are trapped in the pores, and the porous filter makes the resistivity of the liquid after passing through the pores larger than the resistivity of the liquid before passing through the pores.
   According to this feature, it is possible to reduce the metal ion concentration of the liquid without using an ion exchange resin or an insolubilizing agent.
(2) In the adjustment device according to the present invention, the metal particles may include at least one of iron, aluminum, copper, zinc, tungsten carbide, tungsten, molybdenum, carbon, titanium, silicon, manganese, chromium, phosphorus, sulfur, and nickel. According to this feature, it is possible to appropriately increase the resistivity of the liquid containing metal ions but no solid metal substance.
(3) In the adjustment device according to the present invention, the metal particles may be machining chips generated by machining of the workpiece performed by the machine tool. According to this feature, it is possible to appropriately increase the resistivity of the liquid containing metal ions but no solid metal substance.
(4) In the adjustment device according to the present invention, the porous filter may be a filter that has been used in the past as a filtration filter configured to remove machining chips generated by machining of the workpiece performed by the machine tool. According to this feature, the filtration filter can be recycled.
(5) The adjustment device according to the present invention may further include: the bypass conduit (22) connected to the liquid inflow portion and the liquid outflow portion while bypassing the porous filter; the switching device (24) configured to switch the supply destination of the liquid to either the bypass conduit or the porous filter; the resistivity meter (26) configured to measure the resistivity of the liquid supplied to the liquid inflow portion; and the controller (28) configured to control the switching device to switch the supply destination of the liquid to the porous filter in a case where the resistivity of the liquid is lower than the predetermined threshold, and control the switching device to switch the supply destination of the liquid to the bypass conduit in a case where the resistivity of the liquid is equal to or greater than the predetermined threshold. According to this feature, the liquid can be supplied to the porous filter only when necessary. Therefore, the life time of the porous filter can be increased as compared with a case where the liquid is always supplied to the porous filter.
(6) The present invention is characterized by the adjustment method for adjusting the resistivity of a liquid containing metal ions but no solid metal substance, the adjustment method including: causing the liquid to flow through pores of the porous filter in which solid metal particles are trapped, thereby making the resistivity of the liquid after passing through the pores larger than the resistivity of the liquid before passing through the pores.
   According to this feature, it is possible to reduce the metal ion concentration of the liquid without using an ion exchange resin or an insolubilizing agent.
(7) The adjustment method according to the present invention may further include: the measuring step (P12) of measuring the resistivity of the liquid supplied to the porous filter; and the switching step (P13) of, based on the measurement result, switching the supply destination of the liquid to either the porous filter or the bypass conduit bypassing the porous filter, wherein, in the switching step, the supply destination of the liquid may be switched to the porous filter in a case where the resistivity of the liquid is lower than the predetermined threshold, and the supply destination of the liquid may be switched to the bypass conduit in a case where the resistivity of the liquid is equal to or greater than the predetermined threshold. According to this feature, the liquid can be supplied to the porous filter only when necessary. Therefore, the life time of the porous filter can be increased as compared with a case where the liquid is always supplied to the porous filter.
(8) The present invention is characterized by the manufacturing method for manufacturing the adjustment device that adjusts the resistivity of a liquid containing metal ions but no solid metal substance, the manufacturing method including: the recovery step (P1) of recovering, from the machine tool, the filtration filter configured to remove machining chips generated by machining of the workpiece performed by the machine tool; and the accommodating step (P2) of accommodating the filtration filter in the container including the inlet and the outlet for the liquid.

According to this feature, it is possible to reduce the metal ion concentration of the liquid without using an ion exchange resin or an insolubilizing agent. Further, the filtration filter can be recycled.

The present invention is not limited to the above disclosure, and various modifications are possible without departing from the essence and gist of the present invention.

### REFERENCE SIGNS LIST

- 10:: adjustment device
- 12:: container
- 14:: porous filter
- 16:: container body portion
- 18:: liquid inflow portion
- 20:: liquid outflow portion
- 22:: bypass conduit
- 24:: switching device
- 26:: resistivity meter
- 28:: controller

## Claims

1. An adjustment device (10) that adjusts a resistivity of a liquid containing metal ions but no solid metal substance, the adjustment device comprising:
a container (12) including a liquid inflow portion (18) and a liquid outflow portion (20); and
a porous filter (14) accommodated in the container and configured to supply the liquid from the liquid inflow portion to the liquid outflow portion through pores,
wherein metal particles in a form of solid are trapped in the pores, and
the porous filter makes a resistivity of the liquid after passing through the pores larger than a resistivity of the liquid before passing through the pores.

2. The adjustment device according to claim 1, wherein
the metal particles include at least one of iron, aluminum, copper, zinc, tungsten carbide, tungsten, molybdenum, carbon, titanium, silicon, manganese, chromium, phosphorus, sulfur, and nickel.

3. The adjustment device according to claim 1 or 2, wherein
the metal particles are machining chips generated by machining of a workpiece performed by a machine tool.

4. The adjustment device according to any one of claims 1 to 3, wherein
the porous filter is a filter that has been used in a past as a filtration filter configured to remove machining chips generated by machining of a workpiece performed by a machine tool.

5. The adjustment device according to any one of claims 1 to 4, further comprising:
a bypass conduit (22) connected to the liquid inflow portion and the liquid outflow portion while bypassing the porous filter;
a switching device (24) configured to switch a supply destination of the liquid to either the bypass conduit or the porous filter;
a resistivity meter (26) configured to measure a resistivity of the liquid supplied to the liquid inflow portion; and
a controller (28) configured to control the switching device to switch the supply destination of the liquid to the porous filter in a case where the resistivity of the liquid is lower than a predetermined threshold, and control the switching device to switch the supply destination of the liquid to the bypass conduit in a case where the resistivity of the liquid is equal to or greater than the predetermined threshold.

6. An adjustment method for adjusting a resistivity of a liquid containing metal ions but no solid metal substance, the adjustment method comprising:
causing the liquid to flow through pores of a porous filter in which metal particles in a form of solid are trapped, thereby making a resistivity of the liquid after passing through the pores larger than a resistivity of the liquid before passing through the pores.

7. The adjustment method according to claim 6, further comprising:
a measuring step (P12) of measuring a resistivity of the liquid supplied to the porous filter; and a switching step (P13) of, based on a measurement result, switching a supply destination of the liquid to either the porous filter or a bypass conduit bypassing the porous filter, wherein
in the switching step,
the supply destination of the liquid is switched to the porous filter in a case where the resistivity of the liquid is lower than a predetermined threshold, and the supply destination of the liquid is switched to the bypass conduit in a case where the resistivity of the liquid is equal to or greater than the predetermined threshold.

8. A manufacturing method for manufacturing an adjustment device that adjusts a resistivity of a liquid containing metal ions but no solid metal substance, the manufacturing method comprising:
a recovery step (P1) of recovering, from a machine tool, a filtration filter configured to remove machining chips generated by machining of a workpiece performed by the machine tool; and
an accommodating step (P2) of accommodating the filtration filter in a container including an inlet and an outlet for the liquid.
